(19)

Europäisches
Patentamt
European
Patent Office
Office européen
des brevets

(11)   **EP 3 761 055 A1**

(12)   # EUROPEAN PATENT APPLICATION

(43) Date of publication:
   **06.01.2021   Bulletin 2021/01**

(21) Application number: **20179836.0**

(22) Date of filing: **12.06.2020**

(51) Int Cl.:
   **G01S 7/481** *(2006.01)*   **G01S 7/48** *(2006.01)*
   **G01S 17/10** *(2020.01)*   **G01S 17/50** *(2006.01)*
   **G01S 7/4865** *(2020.01)*   **G02B 27/00** *(2006.01)*

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**
   Designated Validation States:
   **KH MA MD TN**

(30) Priority:   **05.07.2019   JP 2019125650**

(71) Applicant: **Ricoh Company, Ltd.**
   **Tokyo 143-8555 (JP)**

(72) Inventors:
   • **NAKAMURA, Tadashi**
    **Tokyo 143-8555 (JP)**
   • **NAKAMURA, Kento**
    **Tokyo 143-8555 (JP)**

(74) Representative: **J A Kemp LLP**
   **14 South Square**
   **Gray's Inn**
   **London WC1R 5JJ (GB)**

(54)   **OPTICAL SCANNER, OBJECT DETECTOR, AND SENSING APPARATUS**

(57)   An optical scanner (1) includes a light source unit (10) configured to emit a laser beam that diverges at a prescribed angle, a light-emitting optical device (20) configured to form the laser beam emitted from the light source unit (10), and a light deflector (30) having a deflecting surface (31) configured to deflect and scan the laser beam emitted through the light-emitting optical device (20). In the optical scanner, a conditional expression

$$a \cos \alpha > f \tan \theta$$

is satisfied, where θ denotes a half angle of the prescribed angle, a denotes a half width of a size of the deflecting surface (31), f denotes focal length of the light-emitting optical device (20), and α denotes an incident angle that the laser beam forms with the deflecting surface (31).

FIG. 1

EP 3 761 055 A1

**Description**

BACKGROUND

Technical Field

Embodiments of the present invention relate to an optical scanner, an object detector, and a sensing apparatus.

Background Art

Optical scanners that deflect laser beams to scan an irradiation field, object detectors that use the emitted laser beams to detect, for example, the presence or absence of an object or the distance to the object, and sensing apparatuses that use such object detectors are known in the art. In particular, such an apparatus or device may be referred to as a light detection and ranging (LiDAR) device or a laser imaging detection and ranging (LiDAR) device.

A LiDAR device detects, for example, the presence of an object ahead of a travelling vehicle (mobile object), or the distance between the vehicle and the object. The LiDAR device irradiates the object with the laser beams emitted from the light source, and a photodetector detects the light reflected or dispersed from the object. By so doing, for example, the presence of an object existing in a specified area, or the distance between the vehicle and the object can be detected.

JP-2018-151278-A discloses a measuring apparatus in which a light receiver receives the return light of the laser beams emitted to an object in order to measure the distance to the object. Such a measuring apparatus includes a light emitting device that emits laser beams, and an optical element through which the emitted laser beams pass, where the optical element reflects the return light that passes through a predetermined area including the optical path of the laser beams, so as to be received by a light receiver. Such a measuring apparatus also includes a concave mirror arranged to reflect the laser beams that are emitted from the light emitting device to an optical scanner (micro-electromechanical systems (MEMS) mirror and to concentrate the return light from the optical scanner onto the optical element.

JP-2018-151278-A discloses that an optical scanner (MEMS mirror) scans laser beams and a light receiver receives the light that is reflected or scattered by an object and then is scanned again by the optical scanner. Due to this configuration, for example, the presence or absence of an object existing in a specified area or the distance to the object can be detected. As described above, a scanning LiDAR device that scans both laser beams and a detection field that can be detected by a detector can concentrate the laser beams only onto an area to be detected, and thus is advantageous in the accuracy of detection or the detection distance. Moreover, the detection field that can be detected by a detector can be minimized, and thus the size of the detector can easily be downsized. In other words, a scanning LiDAR device is advantageous in terms of cost.

In the disclosure of JP-2018-151278-A, a micro-electromechanical systems (MEMS) mirror is used to implement a method of scanning laser beams in a desired range of angle (effective scanning area). In addition to such a MEMS mirror, various kinds of scanners such as a polygon mirror are known in the art. In view of the deflection capability, it is desired that the size of the mirror be small. For example, the size of a MEMS mirror has a trade-off with a resonance frequency or amplitude, and a higher resonance frequency or a larger amplitude are desirable for the system. However, if the mirror is downsized in order to achieve a resonance frequency or amplitude, a large-diameter mirror cannot be implemented. If the size of the deflecting surface of a polygon mirror is small, the weight of the rotor that includes the deflecting surface can be reduced, and the load torque of the motor is reduced. Due to such a configuration, the power consumption can be reduced, or the wind noise can be reduced. When extraneous disturbance such as vibration and shock occurs, the rotation characteristics can be stabilized.

In the disclosure of JP-2018-151278-A, the diameter of the light flux incident on the MEMS mirror is controlled by an optical element such as an aperture of the projection optical system in order to determine the size of the MEMS mirror. In order to make full use of the size of the MEMS mirror, for example, the following measures for the devices in different technical fields are known in the art. That is, an aperture that controls the light-flux width of the laser beams incident on the MEMS mirror is adjusted such that the center (optical axis) of the incident light beam is aligned with the center of the MEMS mirror (see, for example, JP-4965284-B and WO-2015/033494-A).

However, the technology to cut some of the incident light flux with the aperture as described above in order to adjust the positions at which the light is incident on a deflective device is not always appropriate for an object detector (such as a laser radar or LiDAR device) that requires a large amount of light (high radiation intensity of light). In this respect, there is room for improvement in the above technologies.

SUMMARY

Embodiments of the present disclosure described herein provide an optical scanner (1) including a light source unit (10) configured to emit a laser beam that diverges at a prescribed angle, a light-emitting optical device (20) configured to form the laser beam emitted from the light source unit (10), and a light deflector (30) having a deflecting surface (31) configured to deflect and scan the laser beam emitted through the light-emitting optical device (20). In the optical scanner (1), a conditional expression

$$a \cos \alpha > f \tan \theta$$

is satisfied, where θ denotes a half angle of the prescribed angle, a denotes a half width of a size of the deflecting surface (31), f denotes focal length of the light-emitting optical device (20), and α denotes an incident angle that the laser beam forms with the deflecting surface (31).

According to one aspect of the present disclosure, an optical scanner, an object detector, and a sensing apparatus can be provided in which a sufficient radiation intensity of light is secured and the size of the light deflector is reduced.

BRIEF DESCRIPTION OF THE DRAWINGS

A more complete appreciation of embodiments and the many attendant advantages thereof will be readily obtained as the same becomes better understood by reference to the following detailed description when considered in connection with the accompanying drawings.

FIG. 1 is a diagram illustrating a configuration of an optical scanner according to a first embodiment of the present disclosure.

FIG. 2 is a diagram illustrating various kinds of parameters in an optical scanner according to the first embodiment of the present disclosure.

FIG. 3 is a graph illustrating the angular-intensity distribution of the laser beams emitted from a light-emitting optical device, with reference to an angle in the Z-direction, according to the first embodiment of the present disclosure.

FIG. 4 is a diagram illustrating a configuration of an object detector according to the first embodiment of the present disclosure.

FIG. 5 is a functional block diagram of an object detector that implements distance measurement using a time-of-flight (TOF) method, according to the first embodiment of the present disclosure.

FIG. 6 is a diagram illustrating a scanning optical device provided with a light-shielding member, according to the first embodiment of the present disclosure.

FIG. 7A and FIG. 7B are first and second diagrams each illustrating a configuration and effects of an optical scanner according to a second embodiment of the present disclosure.

FIG. 8 is a third diagram illustrating a configuration and effects of an optical scanner according to the second embodiment of the present disclosure.

FIG. 9 is a diagram illustrating a configuration and effects of an optical scanner according to a third embodiment of the present disclosure.

FIG. 10 is a diagram illustrating a cases in which a light-emitting optical device is configured by a plurality of lens surfaces, according to a fifth embodiment of the present disclosure.

FIG. 11 is a diagram illustrating a configuration of a sensing apparatus according to a sixth embodiment of the present disclosure.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

First Embodiment

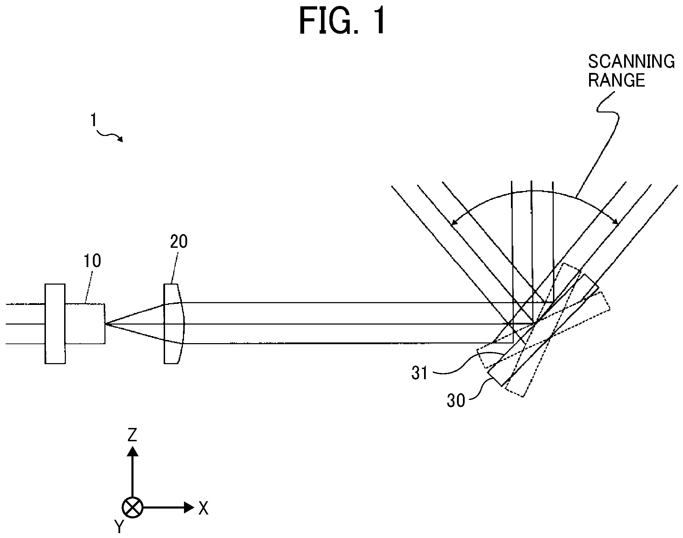

An optical scanner 1 according to a first embodiment of the present disclosure is described below in detail with reference to FIG. 1 to FIG. 6. An X-axis direction, a Y-axis direction, and a Z-axis direction in the following description are indicated by arrows depicted in the drawings. The X-axis direction, the Y-axis direction, and the Z-axis direction are orthogonal to each other and forms three-dimensional space.

FIG. 1 is a diagram illustrating a configuration of the optical scanner 1 according to the first embodiment of the present disclosure.

The optical scanner 1 includes a light source unit 10, a light-emitting optical device 20, and a light deflector (scanning mirror) 30.

The light source unit 10 emits laser beams that diverge at a predetermined angle. For example, the light source unit 10 may be configured by a semiconductor laser (laser diode (LD)). Alternatively, the light source unit 10 may be configured by, for example, a vertical-cavity surface-emitting laser (VCSEL) or a light-emitting diode (LED). As described above, there is a degree of flexibility in how the light source unit 10 is configured, and various kinds of modification or substitution may be made.

The light-emitting optical device 20 forms the laser beams emitted from the light source unit 10. More specifically, the light-emitting optical device 20 approximately collimates the laser beams that diverge at a specific angle. As will be described later in detail, for example, the light-emitting optical device 20 may be configured by a coaxial aspherical lens that couples and approximately collimates the diverging laser beams. In FIG. 1, the light-emitting optical device 20 is illustrated as a single lens. However, no limitation is indicated thereby, and the light-emitting optical device 20 may be configured by a plurality of lenses.

The light deflector 30 has a deflecting surface 31 that deflects and scans the laser beams emitted from the light-emitting optical device 20. More specifically, the light deflector 30 scans and deflects the laser beams that are emitted by the light source unit 10 and the light-emitting optical device 20 in the X-axis direction to a predetermined scanning range on an XZ plane including the X-axis direction and the Z-axis direction. For example, the scanning range of the light deflector 30 is determined by changing the angle of the deflecting surface 31 due to oscillation or rotation. In FIG. 1, the reference position of the light deflector 30 (deflecting surface 31) with reference to the above scanning range is drawn by a solid line, and the scanning position (for example, both ends of the scanning) of the light deflector 30 (deflecting surface 31) with reference to the above scanning range is drawn by a broken line.

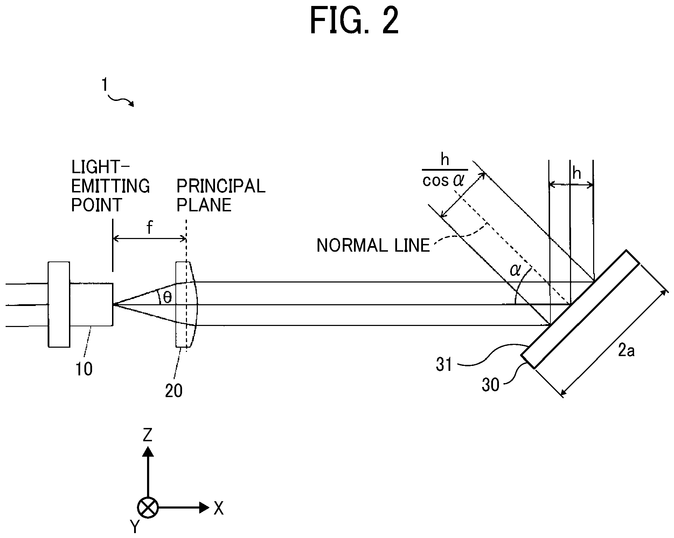

FIG. 2 is a diagram illustrating various kinds of parameters in the optical scanner 1 according to the first embodiment of the present disclosure.

FIG. 2 is a diagram illustrating a state of moment at which scanning is being performed at a certain angle of view within the scanning range as illustrated in FIG. 1, according to the first embodiment of the present disclosure.

In FIG. 2, $\theta$ denotes the half angle of a certain angle (divergence angle) of the laser beams that are emitted from the light source unit 10. Such a certain angle (divergence angle) of the laser beams that are emitted from the light source unit 10 and the half angle $\theta$ of such a certain angle are defined by the angle where the intensity becomes $1/e^2$ of the peak intensity (the angle that the central direction forms with the direction where the intensity becomes $1/e^2$ of the peak intensity) in the profile of the laser beams that are emitted from the light source unit 10. When the intensity of the laser beams that are emitted from the light source unit 10 is in a Gaussian angular distribution, $\theta$ or $2\theta$ includes 95% of the entire amount of light (radiation intensity of light) that is output from the light source unit 10. Due to this configuration, the loss of the amount of the light (radiation intensity of light) that is emitted from the light source unit 10 can be reduced, and the light-emitting optical device 20 can be downsized.

In FIG. 2, a indicates the half width of the deflecting surface 31 of the light deflector 30. In the present embodiment, the deflecting surface 31 of the light deflector 30 may be, for example, square shaped, rectangular shaped, circular shaped, or elliptically shaped. When the deflecting surface 31 of the light deflector 30 is square shaped, the size of the deflecting surface 31 is determined by the length of a side of the square, and the half width a of the size of the deflecting surface 31 can be obtained by dividing the length of a side of the square into two. When the deflecting surface 31 of the light deflector 30 is rectangular shaped, the size of the deflecting surface 31 is determined by the length of a longer or shorter side of the rectangle, and the half width a of the size of the deflecting surface 31 can be obtained b dividing the length of a longer or shorter side of the rectangle into two. When the deflecting surface 31 of the light deflector 30 is circular shaped, the size of the deflecting surface 31 is determined by the diameter of the circle, and the half width a of the size of the deflecting surface 31 can be obtained by dividing the length of a side of the square into two. When the deflecting surface 31 of the light deflector 30 is elliptically shaped, the size of the deflecting surface 31 is determined by the major axis or minor axis of the elliptical shape, and the half width a of the size of the deflecting surface 31 can be obtained by dividing the length of a side of the square into two.

In FIG. 2, f denotes the focal length of the light-emitting optical device 20. As illustrated in FIG. 2, the spacing between the light-emitting point of the light source unit 10 and the principal plane of the light-emitting optical device 20 is adjusted so as to be equal to the focal length f of the light-emitting optical device 20. Due to this configuration, the laser beams that are emitted from the light source unit 10 are approximately collimated by the light-emitting optical device 20.

In FIG. 2, $\alpha$ denotes the incident angle that the laser beam forms with the deflecting surface 31 of the light deflector 30. In other words, $\alpha$ denotes the angle that a normal to the deflecting surface 31 of the light deflector 30 forms with the central light beam (optical axis) of the laser beams before striking the deflecting surface 31 of the light deflector 30.

In FIG. 2, the light flux diameter h of the laser beams that are formed by the light-emitting optical device 20 is expressed in an equation given below.

$$h = 2f \tan \theta$$

The above laser beams are incident on the deflecting surface 31 of the light deflector 30 at an incident angle $\alpha$. In this configuration, the light flux diameter of the laser beams on the deflecting surface 31 of the light deflector 30 is expressed in an equation given below.

$$\frac{h}{\cos \alpha} = \frac{2f \tan \theta}{\cos \alpha}$$

The size 2a (half width a) of the deflecting surface 31 of the light deflector 30 is defined by a conditional expression given below such that the above laser beams are not to be reflected by the deflecting surface 31 of the light deflector 30 in an undesired manner.

$$2a > \frac{2f \tan \theta}{\cos \alpha}$$

If the above equations are organized, a conditional expression that is to be satisfied by the optical scanner 1 according to the first embodiment of the present disclosure is obtained as follows.

$$a \cos \alpha > f \tan \theta$$

In order to achieve a high-level deflection performance, it is desired that the size 2a (half width a) of the deflecting surface 31 of the light deflector 30 be smaller. As it is difficult to control such a certain angle (divergence angle) of the laser beams that are emitted from the light source unit 10 and the half angle $\theta$ of such a certain angle, the focal length f of the light-emitting optical device 20 is made short. Accordingly, a sufficient radiation intensity of light can be achieved, while reducing the size of the deflecting surface 31 of the light deflector 30. Further, when the optical scanner 1 is applied to the object detector 2 and the sensing apparatus 3, an object at an even long distance can be detected with a high degree of precision. In such a configuration, the light flux diameter is determined in a state where the light is coupled by the light-emitting optical device 20 whose focal length is short, instead of cutting some of the incident light flux with the aperture as in the disclosure of JP-4965284-B and WO-2015/033494-A as mentioned above. Accordingly, a sufficient radiation intensity of light can be achieved, while reducing the size of the light deflector 30 (deflecting surface 31). Such an advantageous effect can be achieved at any scanning range (angle of view) of the light deflector 30.

By contrast, when the focal length f of the light-emitting optical device 20 is made short, the curvature of the lens surface of the light-emitting optical device 20 increases, and the influence of the aberration increases. In order to handle such a situation, the light-emitting optical device 20 is configured by a coaxial aspherical lens in the first embodiment of the present disclosure to achieve a design where the spherical aberration is reduced as much as possible.

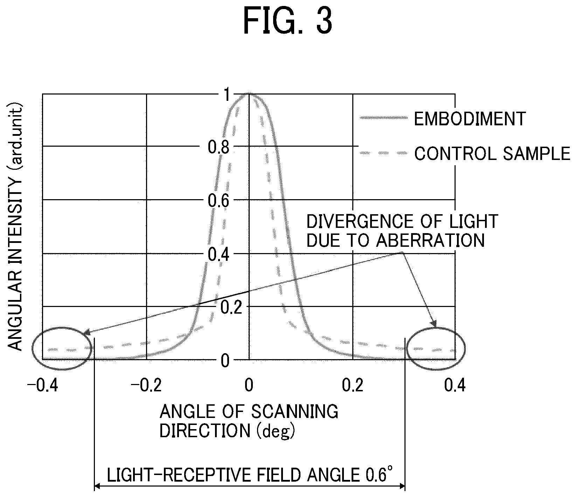

FIG. 3 is a graph illustrating the angular-intensity distribution of the angles of the laser beams emitted from the light-emitting optical device 20 in the Z-direction (i.e. the relation between the angle of scanning direction and the angular intensity), according to the first embodiment of the present disclosure. In FIG. 3, the solid line indicates the profile according to the first embodiment of the present disclosure in which the light-emitting optical device 20 is configured by a coaxial aspherical lens, and the broken lines indicate the profile according to a control sample of the first embodiment of the present disclosure, where the light-emitting optical device is configured by a spherical lens. In the present control sample, the range of beam profile is increased in an undesired manner due to aberration, and is significantly different from the Gaussian distribution. Moreover, 20% of the entire amount of light (radiation intensity of light) is included in the angle outside the light-receptive field angle, and all of such 20% of the entire amount of light is unintentionally lost. By contrast, in the first embodiment of the present disclosure, the light-emitting optical device 20 is configured by a coaxial aspherical lens. As a result, the aberration is efficiently corrected, and approximately all the amount (100%) of light (radiation intensity of light) is incident within a desired light-receptive field angle. In other words, a state in which the light is not reflected by the light receiver in an undesired manner is achieved.

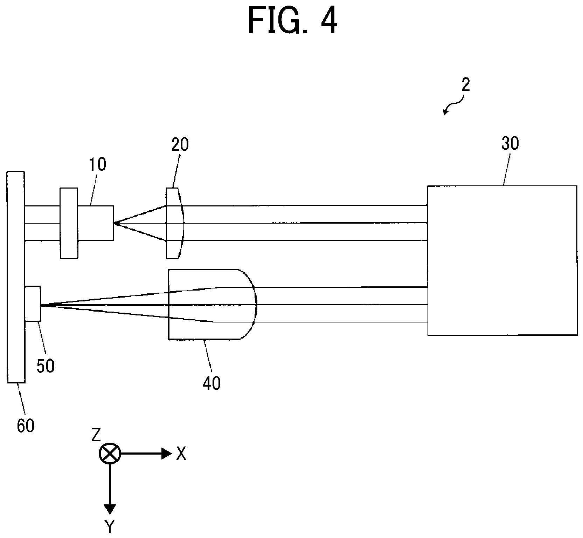

FIG. 4 is a diagram illustrating a configuration of the object detector 2 according to the first embodiment of the present disclosure. The object detector 2 includes a light-receptive optical system 40, a light-receptive optical device 50, and a driver substrate 60 in addition to the light source unit 10, the light-emitting optical device 20, and the light deflector 30 of the optical scanner 1.

When an object exists in the area that is scanned by the light deflector 30 with the laser beams, the laser beams are reflected or scattered by the object. The laser beams that are reflected or scattered by the object pass through the light-receptive optical system 40 and are received by the light-receptive optical device 50. The light-receptive optical device 50 serves as an object detection device. Such an object detection device detects the laser beams that are emitted from the light source unit 10 and then reflected or scattered by an object existing in a detection field, and determines the timing at which the object is to be detected. The driver substrate 60 controls the operation of the light source unit 10 and the light-receptive optical device 50.

For example, the light-receptive optical system 40 may be any one of a lens system, a mirror system, and any other various kinds of configurations that can concentrate the light onto the light-receptive optical device 50. There is a degree of flexibility in the configuration or structure of the light-receptive optical system 40, and the configuration of the light-receptive optical system 40 is not limited any particular configuration.

The light-receptive optical device 50 may be configured by, for example, A photodiode (PD), an avalanche photodiode (APD), a single-photon avalanche diode (SPAD) that serves as a Geiger-mode APD (G-APD), a complementary metal oxide semiconductor (CMOS) imaging device (TOF sensor) that has a time-of-flight (TOF) calculation function on a pixel-by-pixel basis.

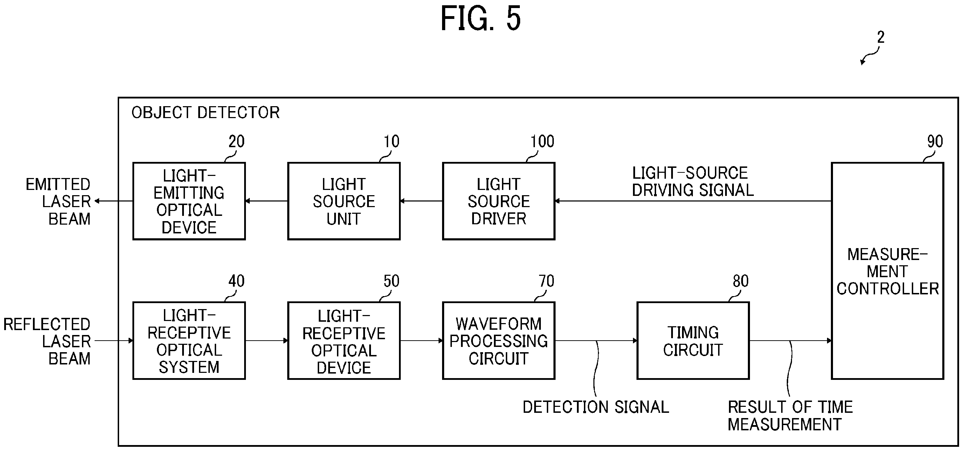

FIG. 5 is a functional block diagram of the object detector 2 that implements distance measurement using a TOF method, according to the first embodiment of the present disclosure. As illustrated in FIG. 5, a waveform processing circuit 70, a timing circuit 80, a measurement controller 90, and a light source driver 100 are arranged as the components that connects the light source unit 10 and the light-receptive optical device 50.

The waveform processing circuit 70 performs predetermined waveform processing on the laser beams received by the light-receptive optical device 50 and outputs a detection signal. The timing circuit 80 measures the length of time from the timing at which light is emitted from the light source unit 10 to the timing at which the object is detected by the light-receptive optical device 50, based on the detection signal output from the waveform processing circuit 70, and outputs the result of time measurement. The measurement controller 90 obtains information about an object existing in a predetermined detection field, based on the result of time measurement, which is input from the timing circuit 80, indicating the length of time from the timing at which light is emitted from the light source unit 10 to the timing at which the object is detected by the light-receptive optical device 50 (the length of time from the timing at which light is emitted from the light source unit 10 and the timing at which the object is detected by the light-receptive optical device 50). Moreover, the measurement controller 90 outputs a light-source driving signal based on the information about the detected object. The light source driver 100 controls the light emission of the light source unit 10 based on a light-source driving signal sent from the measurement controller 90.

The length of time between the timing at which pulses of light are emitted from the light source unit 10 and the timing at which the laser beams returned as reflected by an object reaches the light-receptive optical device 50 is measured through the waveform processing circuit 70 and the timing circuit 80, and the obtained value is multiplied by the speed of light. As a result, the distance that the light goes and returns between the object detector 2 and the object is calculated and obtained. The distance between the light-emitting system and the object is almost the same as the distance between the photodetection system and the object, and thus it can be assumed that the distance between the light source unit 10 and the object is approximately the same as the distance between the object and the light-receptive optical device 50. In view of the above, the obtained go and return distance is divided into two to calculate the distance between the object detector 2 and the object.

As the object detector 2 receives merely some of the light that is reflected or scattered from an object, the amount of the light (radiation intensity of light) that is reflected and returned from the object is reduced when the object is at a long distance. When an object at a longer distance is to be detected, a greater amount of light (greater radiation intensity of light) is required. If the above projection optical system is adopted whose focal length f of the light-emitting optical device 20 is made short in order to satisfy the conditional expressions, the light deflector 30 is downsized, and the data of an object at a long distance can be obtained with a high degree of precision.

In the first embodiment of the present disclosure, an aperture or the like is not arranged in the projection optical system. Due to this configuration, the light that has a wide divergence angle as not coupled by the light-emitting optical device 20 may escape from the space between the light source unit 10 and the light-emitting optical device 20. When such escaping light is incident on the light-receptive optical system 40, a light signal is caused in the absence of an object in the detection field. Such a light signal may result in an erroneous detection.

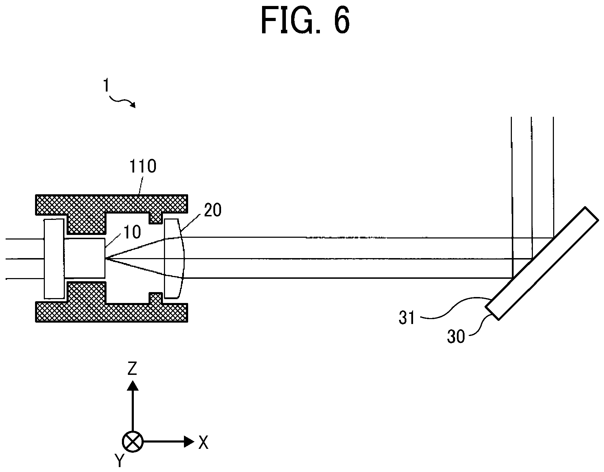

In order to handle such a situation, in the first embodiment of the present disclosure, as illustrated in FIG. 6, the space between the light source unit 10 and the light-emitting optical device 20 is covered by a barrel component 110 such that the escaping light is not guided to the light-receptive optical device 50. In other words, the barrel component 110 serves as a light-shielding member that blocks the laser beams that are emitted from the light source unit 10 but are not incident on the light-emitting optical device 20. In the present embodiment, cases in which the barrel component 110 is used as a light-shielding member are described. However, no limitation is intended thereby. For example, a light-shielding wall may simply be built between the projection optical system and the light-receptive optical system to adjust the relative positions of the light source unit 10 and the light-emitting optical device 20. Other various kinds of configurations may also be adopted.

Second Embodiment

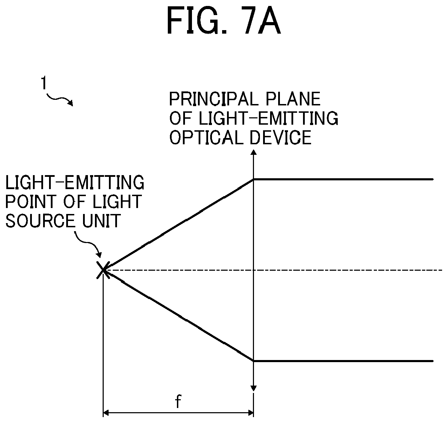

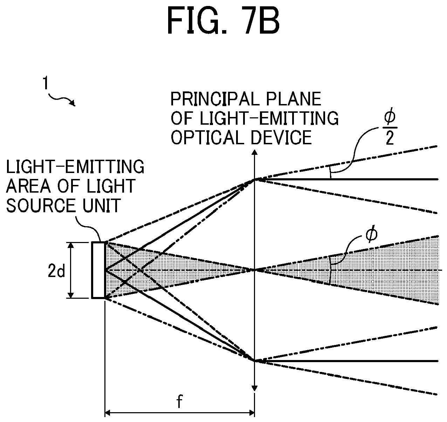

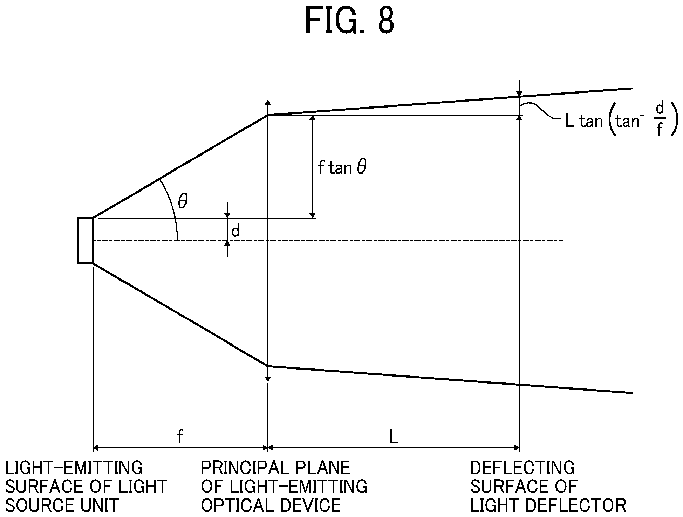

The optical scanner 1 according to a second embodiment of the present disclosure is described below in detail with reference to FIG. 7A, FIG. 7B, and FIG. 8.

FIG. 7A, FIG. 7B, and FIG. 8 are the first, second, and the third diagrams illustrating a configuration and advantageous effect of the optical scanner 1 according to the second embodiment of the present disclosure.

In the first embodiment of the present disclosure, the conditional expressions are defined with no respect to the size of the light-emitting area of the light source unit 10. By contrast, in the second embodiment of the present disclosure, the conditional expressions are better optimized in view of the size of the light-emitting area of the light source unit 10.

As illustrated in FIG. 7A, assuming that the light source unit 10 is a point source of light and that the optical-path length between the light-emitting point of the light source unit 10 and the principal plane of the light-emitting optical device 20 is the focal length f of the light-emitting optical device 20, the laser beams that are emitted from the light source unit 10 and then are formed by the light-emitting optical device 20 are approximately collimated.

By contrast, when a light source unit of higher output power is used to detect an object at a longer distance, as known in the art, the light-emitting area of the light source unit is increased to increase the output power. In such a configuration, as illustrated in FIG. 7B, even when the optical-path length between the light-emitting area of the light source unit 10 and the principal plane of the light-emitting optical device 20 is made to be equivalent to the focal length f of the light-emitting optical device 20, the laser beams that are emitted from the light source unit 10 and then are formed by the light-emitting optical device 20 are not collimated due to the influence of the light-emitting area of the light source unit 10.

In FIG. 7B, the solid lines indicate the laser beams that are emitted from the center of the light-emitting area of the light source unit, and the broken lines indicate the laser beams that are emitted from one end (i.e., the top end in FIG. 7B) of the light-emitting area of the light source unit. Moreover, the dot-dot-dash line indicates the laser beams that are emitted from the other end (i.e., the bottom end in FIG. 7B) of the light-emitting area of the light source unit. As illustrated in FIG. 7B, the laser beams that are emitted from the center of the light-emitting area of the light source unit, as indicated by the solid lines, behave in a similar manner to the laser beams as illustrated in FIG. 7A, and are approximately collimated by the light-emitting optical device. By contrast, the laser beams that are emitted from one end and the other end of the light-emitting area of the light source unit have a component whose light flux diameter diverges after exiting the light-emitting optical device. Some components of the laser beams that are emitted from one end (as indicated by broken lines) and the other end (as indicated by dot-dot-dash lines) of the light-emitting area of the light source unit travel in a straight line after passing through the optical axis on the principal plane of the light-emitting optical device. As the laser beams are approximately collimated by the coupling of the light-emitting optical device, the laser beams that are incident on the ends of the light-emitting optical device exit at an equivalent angle. Due to this configuration, the laser beams diverge at an angle indicated by φ or φ/2 in FIG. 7B. In view of the above properties and characteristics, as the size (dimension) of the light-emitting area of the light source unit is larger, the angle of divergence φ or φ/2 of the laser beams gets wider and becomes unignorable.

In FIG. 8, d denotes the half width of the size of the light-emitting area of the light source unit 10. In the second embodiment of the present disclosure, the light-emitting area of the light source unit 10 may be, for example, square shaped, rectangular shaped, circular shaped, or elliptically shaped. When the light-emitting area of the light source unit 10 is shaped like a square, the size of the light-emitting area of the light source unit 10 is determined by the length of a side of the square, and the half width d of the size of the light-emitting area of the light source unit 10 can be obtained by dividing the length of a side of the square into two. When the light-emitting area of the light source unit 10 is shaped like a rectangle, the size of the light-emitting area of the light source unit 10 is determined by the length of a longer or shorter side of the rectangle, and the half width d of the size of the light-emitting area of the light source unit 10 can be obtained by dividing the length of a side of the square into two. When the light-emitting area of the light source unit 10 is shaped like a circle, the size of the light-emitting area of the light source unit 10 is determined by the diameter of the circle, and the half width d of the size of the light-emitting area of the light source unit 10 can be obtained by dividing the length of a side of the square into two. When the light-emitting area of the light source unit 10 is shaped like an ellipse, the size of the light-emitting area of the light source unit 10 is determined by the major axis or minor axis of the elliptical shape, and the half width d of the size of the light-emitting area of the light source unit 10 can be obtained by dividing the length of a side of the square into two.

In FIG. 8, L denotes the length of the optical path from the principal plane of the light-emitting optical device 20 to the deflecting surface 31 of the light deflector 30.

$\theta$ and f in FIG. 8 are as described above with reference to FIG. 2. In other words, $\theta$ denotes the half angle of such a certain angle (divergence angle) of the laser beams that are emitted from the light source unit 10. f denotes the focal length of the light-emitting optical device 20.

In FIG. 8, the light-flux width (or half width) of the deflecting surface 31 of the light deflector 30 is expressed in an equation given below.

$$d + f \tan \theta + L \tan \left( \tan^{-1} \left( \frac{d}{f} \right) \right)$$

Then, in view of the incident angle that the laser beam forms with the deflecting surface 31 of the light deflector 30, the size 2a (half width a) of the deflecting surface 31 of the light deflector 30 is defined by a conditional expression given below. This conditional expression is to be satisfied by the optical scanner 1 according to the second embodiment of the present disclosure.

$$a \cos \alpha > d + f \tan \theta + L \tan \left( \tan^{-1} \left( \frac{d}{f} \right) \right)$$

Alternatively, in view of the fact that the scale order of the half width d of the size of the light-emitting area of the light source unit 10 is far smaller than the scale orders of other parameters, the following conditional expression from which d is deleted may be adopted.

$$a \cos \alpha > f \tan \theta + L \tan \left( \tan^{-1} \left( \frac{d}{f} \right) \right)$$

Third Embodiment

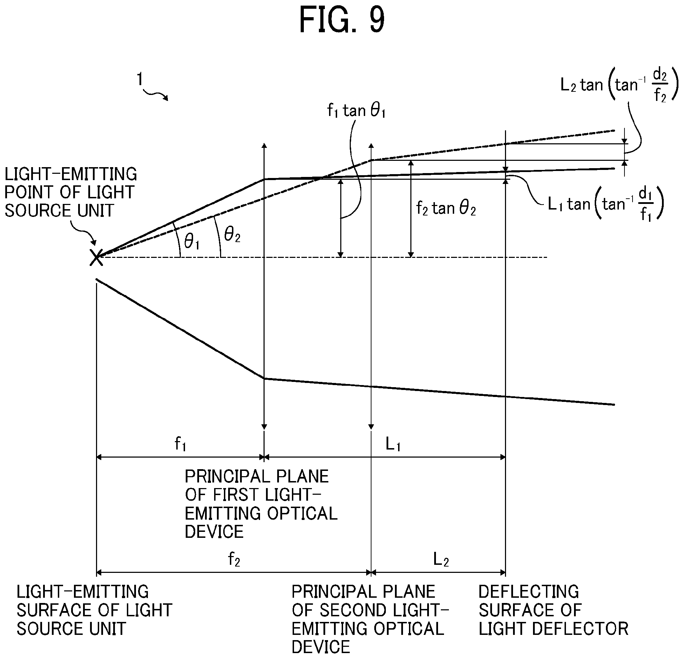

The optical scanner 1 according to a third embodiment of the present disclosure is described below in detail with reference to FIG. 9.

FIG. 9 is a diagram illustrating a configuration and effects of the optical scanner 1 according to the third embodiment of the present disclosure.

In the third embodiment of the present disclosure, the first and second directions that are orthogonal to each other on the plane orthogonal to the direction of travel of the central light beam of the laser beams that are emitted from the light source unit 10 are defined. In the present embodiment, cases are described in which the directions on the ZX plane including the Z-axis direction and the X-axis direction are referred to as the first direction and the directions on the XY plane including the X-axis direction and the Y-axis direction are referred to as the second direction. The size of the light-emitting area of the light source unit 10 or the divergence angle of the laser beams varies between the first direction (ZX plane) and the second direction (XY plane), and a cylindrical lens with different focal length, which corresponds to the first and second directions, may be used for the light-emitting optical device 20.

In FIG. 9, each solid line indicates the behavior of a laser beam in the first direction (ZX plane), and each broken line indicates the behavior of a laser beam in the second direction (XY plane). Among the multiple cylindrical lenses of the light-emitting optical device 20, the cylindrical lens that has an optical power in the first direction is referred to as a first light-emitting optical device, and the cylindrical lens that has an optical power in the second direction is referred to as a second light-emitting optical device. For the sake of explanatory convenience in FIG. 9, the diameter of the light-emitting area of the light source unit 10 in the first and second directions is not illustrated. In the conditional expressions given below, the diameter of the light-emitting area of the light source unit 10 is taken into consideration. In FIG. 9, for purposes of simplification, the behavior of multiple laser beams on varying planes in the first and second directions is drawn in an overlapping manner.

The light source unit 10 has different diameters for the light-emitting area between the direction parallel to the active layer and the direction orthogonal to the active layer, and has a wider divergence angle for the light in the direction where the diameter of the light-emitting area is small than in the direction where the diameter of the light-emitting area is large. The ZX plane in the first direction is the plane to be scanned by the light deflector 30. The XY plane in the second direction is the plane not to be scanned by the light deflector 30. In the example as illustrated in FIG. 9, the diameter of the light-emitting area of the light source unit 10 is smaller in the first direction than in the second direction, and thus the divergence angle of the light in the first direction is wider. In the first direction, the angle of diverging light tends to be narrow after the light is coupled by the first light-emitting optical device.

In actuality, other various kinds of optical elements are involved, and in particular, the spacing $L_1$ and $L_2$ between a group of light-emitting optical devices (i.e., the first and second light-emitting optical devices) and the deflecting surface 31 of the light deflector 30 tends to be longer than the spacing as illustrated in FIG. 9. In such cases, the light-flux width on the deflecting surface 31 of the light deflector 30 tends to be narrower in the first direction. The angle of the deflecting surface 31 of the light deflector 30 changes. In particular, the incident angle of the incident light beam on the deflecting surface 31 of the light deflector 30 increases at the edge of an angle of view on the other side of the light source unit 10, and there are some elements that widens the light flux diameter on the deflecting surface 31 of the light deflector 30 due to the influence of cos $\alpha$ as illustrated in FIG. 2. For this reason, it is desired that the diameter of the light-emitting area of the light source unit 10 be smaller in the first direction, such that the laser beams are not to be reflected by the deflecting surface 31 of the light deflector 30 in an undesired manner.

In FIG. 9, $\theta_1$ denotes the half angle of such a certain angle (divergence angle) of the laser beams that are emitted from the light source unit 10, in the first direction, and $\theta_2$ denotes the half angle of such a certain angle (divergence angle) of the laser beams that are emitted from the light source unit 10, in the second direction.

As will be referred to later in conditional expressions, $a_1$ indicates the half width of the size of the deflecting surface 31 of the light deflector 30 in the first direction, and $a_2$ indicates the half width of the size of the deflecting surface 31 of the light deflector 30 in the second direction.

In FIG. 9, $f_1$ indicates the focal length of the light-emitting optical device 20 in the first direction, and $f_2$ indicates the focal length of the light-emitting optical device 20 in the second direction.

As will be referred to later in conditional expressions, $\alpha_1$ indicates the incident angle that the laser beam forms with the deflecting surface 31 of the light deflector 30 in the first direction, and $\alpha_2$ indicates the incident angle that the laser beam forms with the deflecting surface 31 of the light deflector 30 in the second direction.

In FIG. 9, $d_1$ indicates the half width of the size of the light-emitting area of the light source unit 10 in the first direction, and $d_2$ indicates the half width of the size of the light-emitting area of the light source unit 10 in the second direction.

In FIG. 9, $L_1$ indicates the length of the optical path from the principal plane of the light-emitting optical device 20 to the deflecting surface 31 of the light deflector 30 in the first direction, and $L_2$ indicates the length of the optical path from the principal plane of the light-emitting optical device 20 to the deflecting surface 31 of the light deflector 30 in the second direction.

In the third embodiment of the present disclosure, the conditional expressions according to the second embodiment of the present disclosure are further optimized in view of the fact that the size of the light-emitting area of the light source unit 10 or the divergence angle of the laser beams varies between the first direction (ZX plane) and the second direction (XY plane). More specifically, the half width $a_1$ of the size of the deflecting surface 31 of the light deflector 30 in the first direction and the half $a_2$ width of the size of the deflecting surface 31 of the light deflector 30 in the second direction are defined by conditional expressions given below. This conditional expression is to be satisfied by the optical scanner 1 according to the third embodiment of the present disclosure.

$$a_1 \cos \alpha_1 > d_1 + f_1 \tan \theta_1 + L_1 \tan \left( \tan^{-1} \left( \frac{d_1}{f_1} \right) \right)$$

$$a_2 \cos \alpha_2 > d_2 + f_2 \tan \theta_2 + L_2 \tan \left( \tan^{-1} \left( \frac{d_2}{f_2} \right) \right)$$

Alternatively, in view of the fact that the scale orders of the half widths $d_1$ and $d_2$ of the size of the light-emitting area of the light source unit 10 are far smaller than the scale orders of other parameters, the following conditional expression from which $d_1$ and $d_2$ are deleted may be adopted.

$$a_1 \cos \alpha_1 > f_1 \tan \theta_1 + L_1 \tan \left( \tan^{-1} \left( \frac{d_1}{f_1} \right) \right)$$

$$a_2 \cos \alpha_2 > f_2 \tan \theta_2 + L_2 \tan \left( \tan^{-1} \left( \frac{d_2}{f_2} \right) \right)$$

Fourth Embodiment

In the configuration according the third embodiment of the present disclosure, the focal length $f_1$ of the first light-emitting optical device is shorter than the focal length $f_2$ of the second light-emitting optical device, and the performance is easily affected by aberration. For this reason, in the fourth embodiment of the present disclosure, at least, a cylindrical lens that has an optical power in the first direction of the first light-emitting optical device is not arc-shaped. Alternatively, this configuration may be generalized as follows. When the focal length of the first light-emitting optical device is different from the focal length of the second light-emitting optical device in the first and second directions, one of the first and second light-emitting optical devices whose focal length is shorter than the other in the first and second directions is not arc-shaped. Due to such a configuration, the amount of laser beams (radiation intensity of laser beams) can be bound (dispersion of radiation intensity of light can be reduced) within a desired angle of divergence. Moreover, a sufficient amount of light (sufficient radiation intensity of light) can be secured, and an object at an even longer distance can be detected. On the other hand, the shape of the light-emitting optical device (i.e., the second light-emitting optical device) whose focal length is longer than the other has a degree of flexibility. For example, the light-emitting optical device (i.e., the second light-emitting optical device) may be not arc-shaped when a higher priority is given to securing of the amount of light (radiation intensity of light), and the light-emitting optical device (i.e., the second light-emitting optical device) may be arc-shaped when a higher priority is given to formability, assembling, and a cost. In the fourth embodiment of the present disclosure, it is assumed that the light deflector 30 is a uniaxial scanning mirror. However, no limitation is indicated thereby, and the light deflector 30 may be, for example, a biaxial scanning mirror, and various kinds of modification may be made.

Fifth Embodiment

In the configuration according to the third embodiment of the present disclosure, the focal length $f_1$ of the first light-emitting optical device is shorter than the focal length $f_2$ of the second light-emitting optical device, and the performance is easily affected by aberration. In order to handle such a situation, in the fifth embodiment of the present disclosure, the cylindrical lens that has an optical power at least in the first direction of the first light-emitting optical device is configured to have at least three planes. Alternatively, this configuration may be generalized as follows. When the focal length of the first light-emitting optical device is different from the focal length of the second light-emitting optical device in the first and second directions, one of the first and second light-emitting optical devices whose focal length is shorter than the other in the first and second directions has at least three planes. Due to such a configuration, the amount of laser beams (radiation intensity of laser beams) can be bound (dispersion of radiation intensity of light can be reduced) within a desired angle of divergence. Moreover, a sufficient amount of light (sufficient radiation intensity of light) can be secured, and an object at an even longer distance can be detected. On the other hand, the shape of the light-emitting optical device (i.e., the second light-emitting optical device) whose focal length is longer than the other has a degree of flexibility. For example, the light-emitting optical device (i.e., the second light-emitting optical device) may be not arc-shaped when a higher priority is given to securing of the amount of light (radiation intensity of light), and the light-emitting optical device (i.e., the second light-emitting optical device) may be arc-shaped when a higher priority is given to formability, assembling, and a cost.

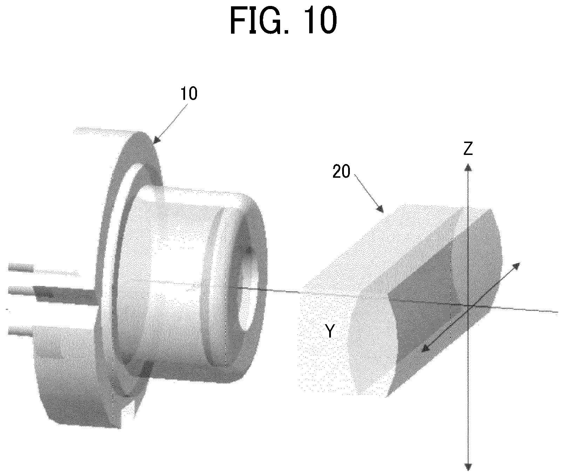

FIG. 10 is a diagram illustrating a cases in which a light-emitting optical device (not-arc-shaped cylindrical lens) is configured by a plurality of lens surfaces such as a doublet to correct the aberration, according to the fifth embodiment of the present disclosure.

Sixth Embodiment

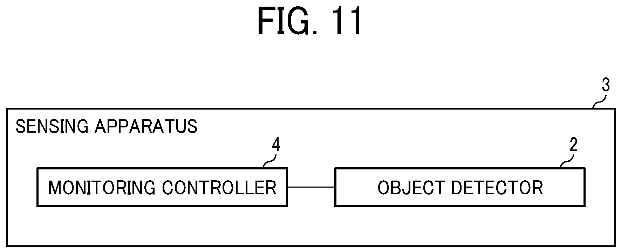

FIG. 11 is a diagram illustrating a configuration of a sensing apparatus 3 according to a sixth embodiment of the present disclosure.

The sensing apparatus 3 includes the object detector 2 as described above and a monitoring controller 4. The object detector 2 and the monitoring controller 4 are electrically connected to each other.

The sensing apparatus 3 is mounted, for example, in a vehicle. More specifically, the sensing apparatus 3 is mounted near a bumper or a rear-view mirror of the vehicle. In FIG. 11, it is illustrated as if the monitoring controller 4 is provided inside the sensing apparatus 3. However, no limitation is indicated thereby, and the monitoring controller 4 may separately be provided for a vehicle, in addition to the sensing apparatus 3.

The monitoring controller 4 obtains information about an object including at least one of the presence or absence of the object, the moving direction of the object, and the speed of the object, based on the data output from the object detector 2. Moreover, the monitoring controller 4 performs processes such as the estimation or determination of the size or shape of an object, the calculation of the position and the movement information of the object, and the recognition of the type of object, based on the data output from the object detector 2. Then, the monitoring controller 4 controls the driving operation of the vehicle based on at least one of the position information and movement information of the object. For example, when it is determined that there is an obstacle ahead of the vehicle, automatic braking is executed using automatic driving technologies. Moreover, a warning may be given, or instructions to turn the steering wheel or instructions to step on brakes may be given.

Note that numerous additional modifications and variations are possible in light of the above teachings. It is therefore to be understood that within the scope of the appended claims, the disclosure of the present disclosure may be practiced otherwise than as specifically described herein. For example, elements and/or features of different illustrative embodiments may be combined with each other and/or substituted for each other within the scope of this disclosure and appended claims.

**Claims**

1. An optical scanner (1) comprising:

   a light source unit (10) configured to emit a laser beam that diverges at a prescribed angle;
   a light-emitting optical device (20) configured to form the laser beam emitted from the light source unit (10); and
   a light deflector (30) having a deflecting surface (31) configured to deflect and scan the laser beam emitted through the light-emitting optical device (20),

wherein a conditional expression

$$a \cos \alpha > f \tan \theta$$

is satisfied, where

θ denotes a half angle of the prescribed angle,
a denotes a half width of a size of the deflecting surface (31),
f denotes focal length of the light-emitting optical device (20), and
α denotes an incident angle that the laser beam forms with the deflecting surface (31).

2.  The optical scanner (1) according to claim 1,
    wherein a conditional expression

$$a \cos \alpha > d + f \tan \theta + L \tan \left( \tan^{-1} \left( \frac{d}{f} \right) \right)$$

is satisfied, where

d denotes a half width of a size of a light-emitting area of the light source unit (10), and
L denotes length of an optical path from a principal plane of the light-emitting optical device (20) to the deflecting surface (31).

3.  The optical scanner (1) according to claim 1 or 2, wherein the light-emitting optical device (20) includes a coaxial aspherical lens.

4.  The optical scanner (1) according to any one of claims 1 to 3,
    wherein first and second directions orthogonal to each other are determined on a plane orthogonal to a direction of travel of a central light beam of the laser beam emitted from the light source unit (10), and
    wherein a pair of conditional expressions

$$a_1 \cos \alpha_1 > d_1 + f_1 \tan \theta_1 + L_1 \tan \left( \tan^{-1} \left( \frac{d_1}{f_1} \right) \right)$$

$$a_2 \cos \alpha_2 > d_2 + f_2 \tan \theta_2 + L_2 \tan \left( \tan^{-1} \left( \frac{d_2}{f_2} \right) \right)$$

are satisfied, where

$\theta_1$ denotes a half angle of the prescribed angle in the first direction,
$\theta_2$ denotes a half angle of the prescribed angle in the second direction,
$a_1$ denotes a half width of a size of the deflecting surface (31) in the first direction,
$a_2$ denotes a half width of a size of the deflecting surface (31) in the second direction,
$f_1$ denotes focal length of the light-emitting optical device (20) in the first direction,
$f_2$ denotes focal length of the light-emitting optical device 20 in the second direction,

$\alpha_1$ denotes an incident angle that the laser beam forms with the deflecting surface (31) in the first direction,
$\alpha_2$ denotes an incident angle that the laser beam forms with the deflecting surface (31) in the second direction,
$d_1$ denotes a half width of a size of a light-emitting area of the light source unit (10) in the first direction,
$d_2$ denotes a half width of the size of the light-emitting area of the light source unit (10) in the second direction,
$L_1$ denotes length of an optical path from a principal plane of the light-emitting optical device (20) to the deflecting surface (31) in the first direction, and
$L_2$ denotes length of an optical path from the principal plane of the light-emitting optical device 20 to the deflecting surface 31 of the light deflector 30 in the second direction.

5. The optical scanner (1) according to any one of claims 1 to 4,
wherein first and second directions orthogonal to each other are determined on a plane orthogonal to a direction of travel of a central light beam of the laser beam emitted from the light source unit (10),
wherein the light-emitting optical device (20) includes a first light-emitting optical device and a second light-emitting optical device, and focal length of the first light-emitting optical device in the first direction is different from focal length of the second light-emitting optical device in the second direction, and
wherein one of the first and second light-emitting optical devices (20) whose focal length is shorter is not arc-shaped.

6. The optical scanner (1) according to any one of claims 1 to 4,
wherein first and second directions orthogonal to each other are determined on a plane orthogonal to a direction of travel of a central light beam of the laser beam emitted from the light source unit (10),
wherein the light-emitting optical device (20) includes a first light-emitting optical device and a second light-emitting optical device, and focal length of the first light-emitting optical device in the first direction is different from focal length of the second light-emitting optical device in the second direction, and
wherein one of the first and second light-emitting optical devices (20) whose focal length is shorter has at least three planes.

7. The optical scanner (1) according to any one of claims 1 to 6, wherein the prescribed angle is determined by an angle where intensity becomes $1/e^2$ of peak intensity in a profile of the laser beam emitted from the light source unit (10).

8. An object detector (2) comprising:

the optical scanner (1) according to any one of claims 1 to 7; and
an object detection device (50) configured to detect the laser beam that is emitted from the light source unit (10) and then reflected or scattered by an object existing in a detection field to determine a timing at which the object is to be detected,
wherein information about the object is obtained based on a timing at which light is emitted by the light source unit (10) and the object detection timing.

9. The object detector (2) according to claim 8, further comprising a light-shielding member (110) configured to block the laser beam that is emitted from the light source unit (10) but is not incident on the light-emitting optical device (20).

10. A sensing apparatus (3) comprising:

the object detector (2) according to claim 8 or 9; and
a monitoring controller (4) configured to obtain information about the object including at least one of presence or absence of the object, a moving direction of the object, and speed of the object, based on output from the object detector (2).

11. The sensing apparatus (3) according to claim 10,
wherein the sensing apparatus (3) is mounted in a vehicle, and
wherein the monitoring controller (4) controls a driving operation of the vehicle based on at least one of position information and movement information of the object.

# FIG. 1

SCANNING
RANGE

1

20

10

31

30

Z

Y

X

# FIG. 2

LIGHT-
EMITTING    PRINCIPAL
POINT       PLANE

$\frac{h}{\cos \alpha}$

NORMAL LINE

$h$

$f$

$\theta$

$\alpha$

10

20

31

30

2a

Z

X

Y

# FIG. 3

# FIG. 4

# FIG. 5

OBJECT DETECTOR

EMITTED LASER BEAM → LIGHT-EMITTING OPTICAL DEVICE (20) → LIGHT SOURCE UNIT (10) → LIGHT SOURCE DRIVER (100) → LIGHT-SOURCE DRIVING SIGNAL → MEASUREMENT CONTROLLER (90)

REFLECTED LASER BEAM → LIGHT-RECEPTIVE OPTICAL SYSTEM (40) → LIGHT-RECEPTIVE OPTICAL DEVICE (50) → WAVEFORM PROCESSING CIRCUIT (70) → DETECTION SIGNAL → TIMING CIRCUIT (80) → RESULT OF TIME MEASUREMENT → MEASUREMENT CONTROLLER (90)

2

# FIG. 6

# FIG. 7A

1

PRINCIPAL PLANE
OF LIGHT-EMITTING
OPTICAL DEVICE

LIGHT-EMITTING
POINT OF LIGHT
SOURCE UNIT

f

# FIG. 7B

# FIG. 8

$$L \tan\left(\tan^{-1}\frac{d}{f}\right)$$

f tan θ

θ

d

f

L

LIGHT-EMITTING
SURFACE OF LIGHT
SOURCE UNIT

PRINCIPAL PLANE
OF LIGHT-EMITTING
OPTICAL DEVICE

DEFLECTING
SURFACE OF
LIGHT DEFLECTOR

# FIG. 9

# FIG. 10

# FIG. 11

```
                                                                    3
┌─────────────────────────────────────────────────────────────────┐
│ SENSING APPARATUS                                                 │
│                            4                              2        │
│   ┌──────────────────────────┐      ┌──────────────────────────┐  │
│   │  MONITORING CONTROLLER   │──────│     OBJECT DETECTOR       │  │
│   └──────────────────────────┘      └──────────────────────────┘  │
│                                                                   │
└───────────────────────────────────────────────────────────────────┘
```

Europäisches
Patentamt

European
Patent Office

Office européen
des brevets

# EUROPEAN SEARCH REPORT

Application Number

EP 20 17 9836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/077083 A1 (SUZUKI SHUICHI [JP] ET AL) 28 March 2013 (2013-03-28) * paragraphs [0115] - [0117], [0136], [0162]; figures 7, 14, 15, 24, 26 * | 1-11 | INV. G01S7/481 G01S7/48 |
| X | US 2006/209373 A1 (KATO MANABU [JP]) 21 September 2006 (2006-09-21) * paragraphs [0056], [0059], [0131]; figures 7, 10 * | 1-7 | ADD. G01S17/10 G01S17/50 G01S7/4865 G02B27/00 |
| A | US 2013/229645 A1 (SUZUKI SHUICHI [JP] ET AL) 5 September 2013 (2013-09-05) * paragraph [0178] * | 3 | |
| A | US 2003/210445 A1 (MORI SEIICHIRO [JP]) 13 November 2003 (2003-11-13) * paragraph [0077] * | 7 | |

TECHNICAL FIELDS
SEARCHED (IPC)

G01S
G02B

The present search report has been drawn up for all claims

| Place of search | Date of completion of the search | Examiner |
|---|---|---|
| Munich | 28 October 2020 | Ferrara, Michele |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 17 9836

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2020

| Patent document cited in search report | | Publication date | Patent family member(s) | | Publication date |
|---|---|---|---|---|---|
| US 2013077083 | A1 | 28-03-2013 | EP 2573580 A2 | | 27-03-2013 |
| | | | JP 5729358 B2 | | 03-06-2015 |
| | | | JP 2013083626 A | | 09-05-2013 |
| | | | US 2013077083 A1 | | 28-03-2013 |
| US 2006209373 | A1 | 21-09-2006 | CN 1834724 A | | 20-09-2006 |
| | | | EP 1707384 A1 | | 04-10-2006 |
| | | | ES 2314841 T3 | | 16-03-2009 |
| | | | JP 4695901 B2 | | 08-06-2011 |
| | | | JP 2006258918 A | | 28-09-2006 |
| | | | KR 20060100244 A | | 20-09-2006 |
| | | | US 2006209373 A1 | | 21-09-2006 |
| US 2013229645 | A1 | 05-09-2013 | CN 103293530 A | | 11-09-2013 |
| | | | EP 2631667 A1 | | 28-08-2013 |
| | | | JP 6025014 B2 | | 16-11-2016 |
| | | | JP 2013170962 A | | 02-09-2013 |
| | | | US 2013229645 A1 | | 05-09-2013 |
| US 2003210445 | A1 | 13-11-2003 | CN 1456919 A | | 19-11-2003 |
| | | | EP 1365272 A2 | | 26-11-2003 |
| | | | JP 2004029751 A | | 29-01-2004 |
| | | | KR 20030087984 A | | 15-11-2003 |
| | | | US 2003210445 A1 | | 13-11-2003 |

EPO FORM P0459

For more details about this annex : see Official Journal of the European Patent Office, No. 12/82

**EP 3 761 055 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018151278 A
- JP 4965284 B
- WO 2015033494 A